# EUROPÄISCHE PATENTSCHRIFT

(11) **EP 1 523 249 B1**
(45) Veröffentlichungstag und Bekanntmachung des Hinweises auf die Patenterteilung: **11.04.2007**
(21) Anmeldenummer: 03787587.9
(22) Anmeldetag: 28.05.2003
(51) Int. Cl.: A23L 2/54, B01F 3/04, C02F 1/68

(54) **VERFAHREN UND VORRICHTUNG ZUM HERSTELLEN VON MIT KOHLENDIOXID VERSETZTEM TAFELWASSER**
METHOD AND DEVICE FOR THE PRODUCTION OF TABLE WATER WITH ADDED CARBON DIOXIDE
PROCEDE ET DISPOSITIF POUR PRODUIRE DE L'EAU DE TABLE AVEC ADJONCTION DE GAZ CARBONIQUE

(30) Priorität: 24.07.2002 DE 10233471
(43) Veröffentlichungstag der Anmeldung: 20.04.2005
(73) Patentinhaber: Kundo System Technik GmbH, 78112 St. Georgen (DE)
(72) Erfinder: BROGHAMMER, Rudolph, 78664 Mariazell (DE)
(74) Vertreter: Goy, Wolfgang
(86) Internationale Anmeldenummer: PCT/DE2003/001731
(87) Internationale Veröffentlichungsnummer: WO 2004/016117

(56) Entgegenhaltungen:
- DE-A- 19 742 301
- DE-U- 20 010 305
- US-A- 4 850 269
- US-A- 5 736 072

## Beschreibung

Die Erfindung betrifft die Verwendung einer Vorrichtung zum Herstellen von mit Kohlendioxid versetztem Tafelwasser.

Als Alternative zu dem Kauf von fertigem Sprudel ist es bekannt, dass man den Sprudel auch zu Hause in entsprechenden Sprudelgeräten herstellen kann. Zu diesem Zweck wird aus dem Wasserhahn stammendes Wasser in dem Gerät mit Kohlendioxid versetzt. Auf diese Weise erhält man ohne großen technischen Aufwand Tafelwasser.

Die bisher bekannten Geräte zum Herstellen von mit Kohlendioxid versetztem Tafelwasser haben den Nachteil, dass die Mischeinrichtung zum Zuführen des Kohlendioxids in das Wasser deshalb sehr voluminös ist, weil ein Vorratsbehälter für das Wasser vorgesehen ist, über dem sich eine Kohlendioxidatmosphäre, im Überdruck mit dem Ziel befindet, dass sich das Kohlendioxid allmählich in dem Wasser löst. Neben der großen Bauweise ist auch der Wirkungsgrad der Einbringung des Kohlendioxids in das Wasser nicht optimal.

Die US 5 736 072 zeigt eine Vorrichtung zum Herstellen von karbonisiertem Wasser. Hierzu ist ein Behälter vorgesehen, welchem über eine Öffnung im Deckel über einen Stutzen Kohlendioxid zugeführt wird. Weiterhin ist im Deckel eine Zuführung mit einer Düse zum Zuführen von Wasser vorgesehen. Bei dieser Düse handelt es sich um ein Rohrelement mit einem Boden, in welchem drei Bohrungen ausgebildet sind. Die Zuführung des Kohlendioxids erfolgt mittels eines Stutzens über eine Öffnung im Deckel des Behälters. Die Funktionsweise ist wie folgt: Das Wasser wird über die Düse dem Innern des Behälters zugeführt und trifft dabei auf die Oberfläche des bereits im Behälter befindlichen Wassers. Während der Zeitdauer zwischen dem Verlassen der Düse und dem Auftreffen des Wassers auf die Oberfläche des im Behälter befindlichen Wassers reichert sich das Wasser mit dem Kohlendioxid an, welches sich im Behälter oberhalb der Wasseroberfläche befindet.

Die DE 42 21 774 A1 zeigt ein Verfahren sowie eine Vorrichtung zur Begasung und Entkeimung wäßriger Flüssigkeiten, welche dem Erfindungsgegenstand vom konstruktiven Aufbau her am nächsten kommt. Zur Begasung kann beispielsweise Kohlendioxid verwendet werden. Das Grundprinzip besteht in einem senkrecht stehenden, rohrförmigen Behälter, der oben einen Behälterkopf aufweist. In diesem Behälterkopf mündet eine Zuleitung für die wäßrige Flüssigkeit. Im Bereich zwischen dem Behälterkopf und dem Behälter befindet sich ein Siebboden. Im Bereich unterhalb des Siebbodens mündet in den Behälter eine Gaszuleitung beispielsweise für das Kohlendioxid. Im unteren Bereich des Behälters befindet sich schließlich ein Behälterboden mit einem Auslaß für die Flüssigkeit. Die Funktionsweise ist wie folgt: Das Wasser wird unter Vordruck durch die Leitung in den Behälter eingeleitet. Das Wasser wird dabei durch den Siebboden hindurchgepreßt und versprüht und gelangt dadurch sehr fein verteilt in den Gasraum im Inneren des Behälters. Dabei sättigt sich das Wasser mit dem Gas an.

Der Erfindung liegt die **Aufgabe** zugrunde, die Verwendung einer Vorrichtung zur technisch einfachen Herstellung von mit Kohlendioxid versetztem Tafelwasser zu schaffen, bei dem die Einbringung des Kohlendioxids in das Wasser verbessert ist

Die technische **Lösung** ist gekennzeichnet durch die Merkmale des Anspruchs 1.

Dadurch ist die Verwendung einer Vorrichtung zum Herstellen von mit Kohlendioxid versetztem Tafelwasser geschaffen, welche sich durch eine optimale Einbringung des Kohlendioxids in das Wasser auszeichnet. Die Grundidee besteht darin, die Oberfläche des Wassers in einem unter Druck stehenden, mit Kohlendioxid gefüllten Gasraum im Vergleich zum "Normalzustand" des Wassers zu vergrößern. Dabei kann das Wasser in unterschiedlichen Formen vorliegen. Das Wasser erfährt dadurch eine sehr große Oberfläche, so dass sich die notwendige Menge an Kohlendioxid in den Wasserteilchen lösen kann. Das mit Kohlendioxid versetzte Tafelwasser sammelt sich dann in einem entsprechenden Behälter und kann für den Verbrauch entnommen werden.

Ein scharfer Wasserstrahl trifft auf die Wasseroberfläche auf, so dass das Wasser aufgewirbelt wird und im weitesten Sinne eine Art Schaum oder eine Aufschäumung entsteht.

Das zugeführte Wasser wird gepreßt durch eine Einspritzplatte oder eine Mikromischplatte, welches mit einer Mehrzahl von Bohrungen versehen ist. Dadurch werden Wasserstrahlen erzeugt, welche auf das bereits im Behälter befindliche Tafelwasser auftreffen und dieses fein verteilt aufschäumen. Durch diese Aufschäumung des Wassers entsteht eine große Oberfläche und somit eine große Kontaktfläche zu dem umgebenden Kohlendioxid. Ein derartiges mit einer Vielzahl von feinen Bohrungen versehenes Element lässt sich technisch sehr einfach herstellen. Au-ßerdem tritt kein Verlust an Kohlendioxid in dem Behälter auf, da immer aus dem Volumen gezapft wird. Denn am unteren Ende des Behälters sammelt sich das Tafelwasser und kann von dort aus entnommen werden.

Durch die Ausgestaltung des Behältnisses in Form eines Rohres, ist es möglich, das eine Ende mit dem Wasser-Zulauf mit der Einspritzplatte und am anderen Ende den Tafelwasser-Auslass anzuordnen. Vorzugsweise kann sich in Strömungsrichtung der Wasser-Zulauf konisch erweitern und der Tafelwasser-Auslass konisch verjüngen. Das Anschlussteil für das Kohlendioxid mündet in der Wandung des Rohres. Die Verwendung eines Rohres hat den Vorteil der guten Reinigung. Außerdem wird eine Sumpfbildung vermieden.

Die Weiterbildung gemäß Anspruch 2 und 4 hat den Vorteil, dass der Karbonator nur aus ganz wenigen Teilen besteht, nämlich einem Rohr, zwei Endstücken, der Einspritzplatte und der Kohlendioxid-Zuführung. Dadurch lässt sich der Karbonator technisch sehr einfach und damit sehr kostengünstig herstellen.

Die Weiterbildung gemäß Anspruch 3 schafft eine technisch einfache Anordnung der Einspritzplatte. Die Grundidee besteht darin, diese Einspritzplatte zwischen einer insbesondere versenkten Stirnseite des Rohres und dem Anschlussstück für den Wasser-Zulauf festzuklemmen.

Die Weiterbildung gemäß Anspruch 5 gibt Größen für die Bohrungen an, mit denen ein Versprühen des Wassers derart möglich ist, dass nach dem Kontakt mit der Kohlendioxid-Atmosphäre die gewünschte Menge an Kohlendioxid aufgenommen wird.

Die Weiterbildung gemäß Anspruch 6 hat den Vorteil, dass eine kontinuierliche Entnahme des mit Kohlendioxid versetzten Tafelwassers möglich ist.

Die Weiterbildung gemäß Anspruch 7 schließlich schlägt eine Möglichkeit zur einfachen Verfahrensdurchführung vor. Die Grundidee besteht darin, keine Regelung des Wasserdrucks im Vergleich zum Kohlendioxiddruck durchzuführen, sondern durch eine Leitwertmessung die Höhe des Tafelwassersspiegels zu ermitteln, um daraus eine Taktung der Wasserpumpe für die weitere Zufuhr von Wasser abzuleiten.

Ein Ausführungsbeispiel einer erfindungsgemäßen Vorrichtung zum Herstellen von mit Kohlendioxid versetztem Tafelwasser wird nachfolgend anhand der Zeichnungen beschrieben. In diesen zeigt:

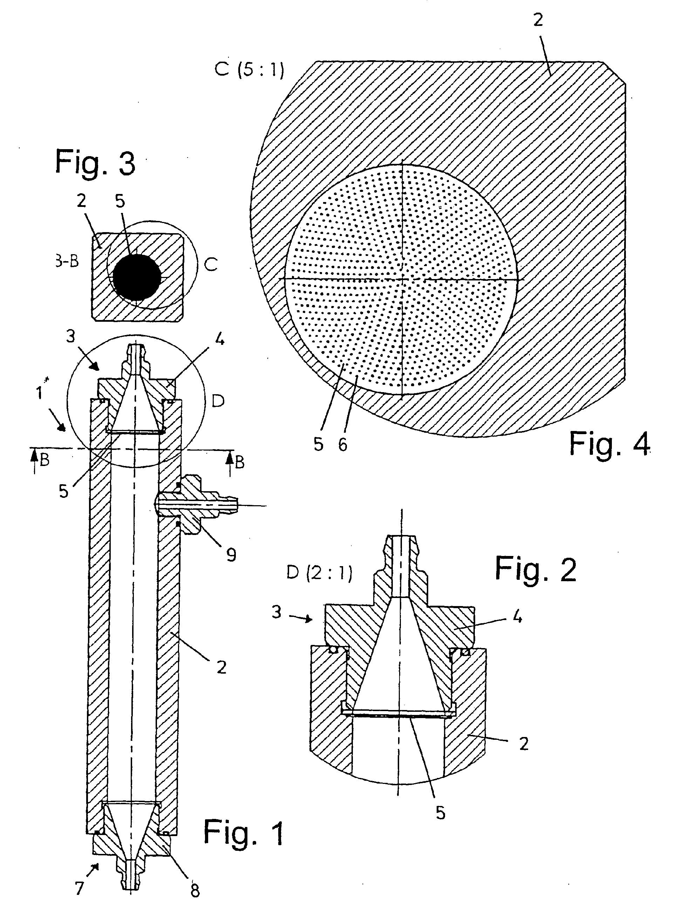

- Fig. 1: einen Längsschnitt durch den Röhrenkarbonstor;
- Fig. 2: eine ausschnittsweise Vergrößerung des Röhrenkarbonators im Bereich des Wasser-Zulaufs;
- Fig. 3: einen Schnitt entlang der Linie B - B in Fig. 1;
- Fig. 4: ein ausschnittsweise vergrößerter Detailausschnitt der Darstellung in Fig. 3;
- Fig. 5: eine Prinzipdarstellung der gesamten Anlage zum Herstellen von Tafelwasser.

Der Röhrenkarbonator 1 weist einen Behälter 2 in Form eines Rohres auf. Dieses kann einen quadratischen, aber auch einen runden Querschnitt besitzen. Das Innere weist eine runde Innenbohrung auf. Andere Querschnittsformen sind denkbar.

In der Zeichnung oben ist der Wasser-Zulauf 3 angeordnet. Es handelt sich dabei um ein auf das Ende des Rohres einschraubbares Endstück 4 mit zugehörigen Dichtungen. Zwischen der unteren Stirnseite dieses Endstücks 4 und der entsprechenden Gegenfläche im Innern des Behälters 2 ist eine Platte 5 festgelegt. Diese Platte 5 weist eine Vielzahl von Bohrungen 6 mit einem Durchmesser von ca. 0,25 mm auf.

Unten befindet sich der Tafelwasser-Auslass 7 mit einem Endstück 8, welches entsprechend dem Endstück 4 des Wasser-Zulaufs 3 ausgebildet ist.

Seitlich in dem Behälter 2 mündet noch eine Kohlendioxid-Zuführung 9.

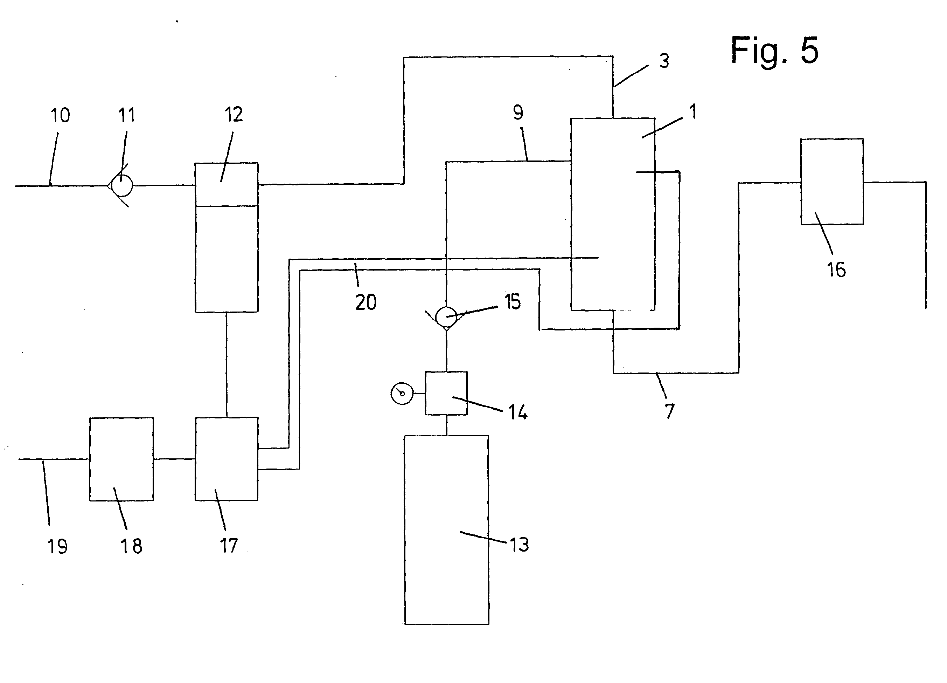

Die Funktionsweise ist unter Bezugnahme auf Fig. 5 wie folgt:

Der Röhrenkarbonator 1 ist an das Wassernetz 10 angeschlossen und pumpt nach Passieren eines Rückschlagventils 11 mittels einer Hochdruckpumpe 12 das Wasser zum Wasser-Zulauf 3 des Röhrenkarbonators 1.

Weiterhin wird aus einer Kohlendioxidflasche 13 nach Passieren eines Druckminderers 14 und eines Rückschlagventils 15 Kohlendioxid in den Behälter 2 gepumpt.

Das untere Ende des Röhrenkarbonators 1 mit seinem Tafeiwasser-Ausiass 7 ist an einen Ausschankhahn 16 angeschlossen.

Eine Regelelektronik 17, welche über ein Netzteil 18 an das Stromnetz 19 angeschlossen ist, sorgt für die Steuerung der Tafelwasseranlage. Insbesondere führt diese Regelelektronik 17 über entsprechende Leitungen 20 innerhalb des Behälters 2 Leitwerimessungen durch, welche den Maximalwert und den Minimalwert des Tafelmasserstandes innerhalb des Behälters 2 definieren. In Abhängigkeit von dem Messwert taktet die Regelelektronik 17 die Hochdruckpumpe 12 für das zugeführte Wasser.

Statt dessen ist es auch denkbar, nur eine einzige Leitwertmessung zur Ermittlung des unteren Minimalwertes des Tafelwasserstandes durchzuführen. Wird dieser untere Wasserstand erreicht, wird eine bestimmte Menge Wasser zugegeben.

Statt einer Leitwertmessung kann auch eine optische Füllstandsmessung durchgeführt werden.

Dieses zugeführte Wasser wird mit einem hohen Druck von 11 bar durch die Platte 5 mit ihren Bohrungen 6 in das Innere des Behälters 2 hineingepresst, welches mit Kohlendioxid mit einem ständigen Druck von 7 bar gefüllt ist. Durch die Feinheit der Bohrungen 6 entstehen feine Wasserstrahlen, welche auf die Oberfläche des bereits im Behälter 2 befindlichen Wassers aufgeschossen werden (der Behälter 2 ist zu etwa 2/3 mit Wasser gefüllt) und das Wasser zu einer großen Oberfläche aufschäumen und verwirbeln, über die sich das Kohlendioxid in dem Wasser lösen kann. Am unteren Ende des Behälters 2 sammelt sich das Tafelwasser und kann entnommen werden.

### Bezugszeichenliste

- 1: Röhrenkarbonator
- 2: Behälter
- 3: Wasser-Zulauf
- 4: Endstück
- 5: Platte
- 6: Bohrung
- 7: Tafelwasser-Auslass
- 8: Endstück
- 9: Kohlendioxid-Zuführung
- 10: Wassernetz
- 11: Rückschlagventil
- 12: Hochdruckpumpe
- 13: Kohlendioxidflasche
- 14: Druckminderer
- 15: Rückschlagventil
- 16: Ausschankhahn
- 17: Regelelektronik
- 18: Netzteil
- 19: Stromnetz
- 20: Leitung für Leitwertmessung

## Patentansprüche

1. Verwendung einer Vorrichtung
mit einem Behälter (2) in Form eines senkrechten Rohres,
mit einem in dem Behälter (2) mündenden Wasser-Zulauf (3) für das Wasser an dessen oberem Ende,
mit einem unterhalb des Wasser-Zulaufs (3) angeordneten Düsenelement in Form einer Platte (5), die sich über die gesamte Innenbohrung des Rohres erstreckt und über die Fläche verteilt Bohrungen (6) aufweist, durch die hindurch das zugeführte Wasser in den Rohrabschnitt unterhalb der Platte (5) gelangt,
mit einer im Mantel des Rohres unterhalb der Platte (5) mündenden Kohlendioxid-Zuführung (9) für das Kohlendioxid zur Schaffung einer Kohlendioxid-Atmosphäre in dem Behälter (2) sowie
mit einem Auslaß (7) für das Wasser am unteren Ende des Behälters (2)
zum Herstellen von mit Kohlendioxid versetztem Tafelwasser in der Weise,
daß das Wasser durch eine Hochdruckpumpe (12) in der Wasserzuführung mit einem derartigen scharfen Wasserstrahl durch die Bohrungen (6) der Platte (5) hindurch auf die Oberfläche des bereits zugeführten Wassers gespritzt wird, daß dadurch das Wasser zu feinen Tröpfchen oder einem Nebel aufgeschäumt oder aufgewirbelt wird.

2. Verwendung nach dem vorhergehenden Anspruch,
**dadurch gekennzeichnet,**
**daß** der Wasser-Zulauf (3) durch ein auf das obere Rohrende aufsteckbares oder aufschraubbares Endstück (4) gebildet ist.

3. Verwendung nach Anspruch 2,
**dadurch gekennzeichnet,**
**daß** die Platte (5) zwischen dem oberen Rohrende und dem Endstück (4) des Wasser-Zulaufs (3) festgelegt ist.

4. Verwendung nach einem der vorhergehenden Ansprüche,
**dadurch gekennzeichnet,**
**daß** der Tafelwasser-Auslaß (7) durch ein auf das untere Rohrende aufsteckbares oder aufschraubbares Endstück (8) gebildet ist.

5. Verwendung nach einem der vorhergehenden Ansprüche,
**dadurch gekennzeichnet,**
**daß** die Bohrungen (6) einen Durchmesser von 0,05 bis 0,5 mm aufweisen.

6. Verwendung nach einem der vorhergehenden Ansprüche,
**dadurch gekennzeichnet,**
**daß** die Herstellung des Tafelwassers im kontinuierlichen Durchlauf erfolgt.

7. Verwendung nach einem der vorhergehenden Ansprüche,
**dadurch gekennzeichnet,**
**daß** zur Ablaufsteuerung eine Leitwertmessung zur Ermittlung des Wasserstandes durchgeführt wird.

## Claims

1. Use of a device with a container (2) in the form of a perpendicular pipe, with a water feed (3) for the water, which opens into the container (2) at its upper end, with a nozzle element, which is arranged below the water feed (3), in the form of a plate (5), which extends over the entire inner bore of the pipe and has bores (6) distributed over the surface, through which the water supplied arrives in the pipe portion below the plate (5), with a carbon dioxide supply (9), which opens in the casing of the pipe below the plate (5), for the carbon dioxide to create a carbon dioxide atmosphere in the container (2) and with an outlet (7) for the water at the lower end of the container (2) to produce table water with added carbon dioxide in such a way that the water is sprayed by a high pressure pump (12) in the water supply onto the surface of the water already supplied, through the holes (6) of the plate (5), with a water jet which is so fierce that the water is thereby foamed or swirled up into fine drops or a mist.

2. Use according to the preceding claim, **characterised in that** the water feed (3) is formed by an end piece (4) which can be plugged or screwed onto the upper pipe end.

3. Use according to claim 2, **characterised in that** the plate (5) is fixed between the upper pipe end and the end piece (4) of the water feed (3).

4. Use according to any one of the preceding claims, **characterised in that** the table water outlet (7) is formed by an end piece (8) which can be plugged or screwed onto the lower pipe end.

5. Use according to any one of the preceding claims, **characterised in that** the bores (6) have a diameter of 0.05 to 0.5 mm.

6. Use according to any one of the preceding claims, **characterised in that** the table water is produced in a continuous cycle.

7. Use according to any one of the preceding claims, **characterised in that** a conductance measurement is carried out to determine the water level for sequence control.

## Revendications

1. Utilisation d'un dispositif comprenant:
- un réservoir (2) ayant la forme d'un tube vertical,
- une arrivée d'eau (3) débouchant à l'extrémité supérieure du réservoir (2),
- une buse disposée sous l'arrivée d'eau (3) et ayant la forme d'une plaquette (5) qui s'étend sur toute la section transversale intérieure du tube et qui présente des perçages (6) répartis sur la surface, que l'eau traverse pour atteindre le segment du tube situé sous la plaquette (5),
- une arrivée de gaz carbonique (9) débouchant dans l'enveloppe du tube, sous la plaquette (5), pour amener dans le réservoir (2) le gaz carbonique destiné à créer une atmosphère de gaz carbonique,
- ainsi qu'une sortie (7) pour l'eau à l'extrémité inférieure du réservoir (2),
pour fabriquer de l'eau de boisson avec adjonction de gaz carbonique de telle manière que l'eau soit projetée par une pompe à haute pression (12) placée dans l'arrivée d'eau, à travers les perçages (6) de la plaquette (5), sur l'eau déjà contenue dans le réservoir, avec une force telle que l'eau soit transformée en fines gouttelettes ou en brume.

2. Utilisation selon la revendication précédente, **caractérisée en ce que** l'arrivée d'eau (3) est formée par un embout (4) pouvant être enfoncé ou vissé sur l'extrémité supérieure du tube.

3. Utilisation selon la revendication 2, **caractérisée en ce que** la plaquette (5) est fixée entre l'extrémité supérieure du tube et l'embout (4) de l'arrivée d'eau (3).

4. Utilisation selon l'une des revendications précédentes, **caractérisée en ce que** la sortie d'eau de table (7) est formée par un embout (8) pouvant être enfoncé ou vissé sur l'extrémité inférieure du tube.

5. Utilisation selon l'une des revendications précédentes, **caractérisée en ce que** les perçages (6) présentent un diamètre compris entre 0,05 et 0,5 mm.

6. Utilisation selon l'une des revendications précédentes, **caractérisée en ce que** l'eau de table est produite en continu.

7. Utilisation selon l'une des revendications précédentes, **caractérisée en ce que** l'on mesure la conductance pour déterminer le niveau d'eau, afin de gérer le déroulement du processus.
